# NEUE EUROPÄISCHE PATENTSCHRIFT

(11) **EP 0 491 118 B2**
(45) Veröffentlichungstag und Bekanntmachung des Hinweises auf die Entscheidung über den Einspruch: **16.05.2001**
(45) Hinweis auf die Patenterteilung: 30.08.1995
(21) Anmeldenummer: 91115348.4
(22) Anmeldetag: 11.09.1991
(51) Int. Cl.: G01S 17/87, G01S 17/02

(54) **Reflexions-Lichttaster**
Light sensor switch using reflection
Commutateur photosensible à réflection

(30) Priorität: 15.12.1990 DE 4040225
(43) Veröffentlichungstag der Anmeldung: 24.06.1992
(73) Patentinhaber: Leuze electronic GmbH + Co., D-73277 Owen (DE)
(72) Erfinder: Bückle, Kurt, W-7311 Schlierbach (DE); Manner, Joachim, W-7315 Weilheim/T. (DE); Bauder, Frank, W-7440 Beuren (DE)
(74) Vertreter: Ruckh, Rainer Gerhard, Dr.

(56) Entgegenhaltungen:
- WO-A-89/11710
- DE-A- 3 627 972
- FR-A- 2 429 442
- US-A- 4 659 922
- PATENT ABSTRACTS OF JAPAN, Bd. 014, Nr. 011 (P-988) 11. Januar 1990;& JP-A-1 259 313

## Beschreibung

Die Erfindung betrifft einen Reflexions-Lichttaster nach dem Oberbegriff des Patentanspruchs 1.

Ein derartiger Lichttaster ist aus der DE-PS 35 13 671 bekannt. Um den fernen Schaltpunkt (Grenzabstand) applikationsabhängig veränderbar zu gestalten, ist bei diesem Lichttaster ein drehbar gelagerter Umlenkspiegel derart angeordnet, dass durch Verschwenkung des Umlenkspiegels z.B. die Fokuslage des Empfangslichtbündels quer zur optischen Achse auf der photoelektrischen Wandleranordnung verschiebbar ist. Die photoelektrische Wandleranordnung besteht aus zwei lichtelektrischen Elementen, deren Ausgangssignale einen Differenzverstärker beaufschlagen, so dass am Ausgang des Differenzverstärkers ein der Differenz der Strahlungsleistung auf den beiden lichtelektrischen Elementen entsprechendes Signal ansteht.

Um hierbei zu unterscheiden zwischen den Zuständen "Tastobjekt befindet sich zwischen fernem Schaltpunkt und Lichttaster (Fall 1)" sowie "Tastobjekt befindet sich bei größeren Distanzen als der ferne Schaltpunkt (Fall 2)", ist das Ausgangssignal des Differenzverstärkers an eine Auswerteschaltung angelegt, in der es bezüglich Amplitude und Vorzeichen bewertet wird. Wird das Signal z.B. positiv und erreicht es eine in der Auswerteschaltung vorgesehene Ansprechschwelle, bedeutet das "Tastobjekt entspricht in seiner Lage dem obigen Fall 1". Wird das Signal dagegen kleiner als die Ansprechschwelle, heißt das "Tastobjekt entspricht in seiner Lage dem obigen Fall 2".

Bei einem aus der DE-PS 29 24 685 bekannten Reflexionslichttaster sind zur Veränderung des den fernen Schaltpunkt vorgebenden Winkels zwischen den optischen Achsen der Sende- und Empfangsoptik sowohl die Lichtquelle als auch der Lichtempfänger mit den zugehörigen Optiken in je einer Schwenkhalterung untergebracht. Die Halterungen werden mittels eines Spindeltriebs verschwenkt, wodurch sich der Winkel ändert, unter dem sich die Achsen der Optiken schneiden.

Nachteilig bei diesen Lichttastern ist, dass wenigstens ein Teil ihrer optischen und/oder optoelektronischen Bauelemente nicht gehäusefest, sondern zur Veränderung der Lage des fernen Schaltpunktes verstellbeweglich in dem Gehäuse angeordnet ist. Dieser Aufbau ist apparativ aufwendig, umständlich zu montieren und wenig stabil. Die elektrische Leitungsführung muss darauf ausgelegt sein, die für die Schwenkbewegung erforderliche Freiheit zu lassen, und der Platzbedarf der ganzen Anordnung ist groß.

Aufgabe der Erfindung ist es, einen Lichttaster der eingangs genannten Art zu schaffen, bei dem alle optischen und optoelektrischen Bauelemente sowie die gesamte Elektronik fest und unverrückbar im Gehäuse angeordnet werden können, ohne dass auf die definierte Einstellung eines bestimmten fernen Schaltpunktes verzichtet werden muss.

Diese Aufgabe ist erfindungsgemäß durch die kennzeichnenden Merkmale des Patentanspruchs 1 gelöst. Bei diesem Lichttaster brauchen lediglich die lichtempfindlichen Elemente des Lichtempfängers unterschiedlich bewertet werden.

Damit erreicht man eine stufenlose Einstellung des fernen Schaltpunktes und zwar einzig und allein durch Variation elektronischer Parameter. Somit können alle optischen, optoelektronischen und elektronischen Bauelemente fest und unverrückbar im Gehäuse untergebracht werden.

Um auf einfache Weise einen Lichttaster zu realisieren, der zwei in der Distanz unterschiedliche ferne Schaltpunkte aufweist, kann in Weiterbildung der Erfindung durch einfaches elektronisches Multiplexen zwischen folgenden Distanzbereichen unterschieden werden:
- Tastobjekt befindet sich zwischen dem bezüglich der kürzeren Distanz fernen Schaltpunkt und Lichttaster (Fall 1),
- Tastobjekt befindet sich zwischen dem bezüglich der größeren Distanz fernen Schaltpunkt und Lichttaster (Fall 1'),
- Tastobjekt befindet sich bei größeren Distanzen als der größere ferne Schaltpunkt (Fall 2).

Damit ist mit einfachen Mitteln die Erkennung von Tastobjekten vor, innerhalb und hinter einem definierten Tastbereich möglich, wobei ein Objekt dem entsprechenden Distanzwert zugeordnet werden kann.

Nach einem weiteren Gedanken der Erfindung ist ferner ein Lichttaster realisierbar, der bezüglich der Distanz beliebig viele ferne Schaltpunkte aufweist. Erreicht wird dieses durch kontinuierliche Stromsteuerung der verschiedenen Lichtzentren der Lichtquelle und/oder kontinuierliche Bewertungsvariation der lichtempfindlichen Elemente des Lichtempfängers.

Die kontinuierliche Steuerung kann dabei z.B. mittels sägezahnförmigem Verlauf geschehen, wobei unabhängig vom Distanzwert immer der ferne Schaltpunkt durchfahren wird und der entsprechend zugehörige Amplitudenwert der sägezahnförmigen Steuerung dem aktuellen Distanzwert des Tastobjektes entspricht. Damit ist mit extrem einfachen Mitteln die Realisierung eines Distanzsensors möglich.

Die Erfindung wird im folgenden anhand der Zeichnung, die ein Ausführungsbeispiel veranschaulicht, beschrieben. In dieser zeigt:
- Figur 1:: Prinzipskizze mit den Zentralstrahlen zweier Sendelichtbündel sowie den Zentralstrahl des Empfangslichtbündels und ein Tastobjekt in zwei unterschiedlichen Positionen auf der Z-Achse.
- Figur 2:: Blockschaltbild des erfindungsgemäßen Reflexionslichttasters,
- Figur 3:: Die beiden Lichtzentren beaufschlagenden Stromamplituden als Funktion der Steuerspannung U_{St}, LED zur elektronischen Einstellung des fernen Schaltpunktes.
- Figur 4:: Schematische Darstellung sowohl der realen Sendelichtflecke als auch der virtuellen Sendelichtflecke auf dem Tastobjekt für drei verschiedene Steuerspannungen U_{St}, LED nach Figur 3 und zwar

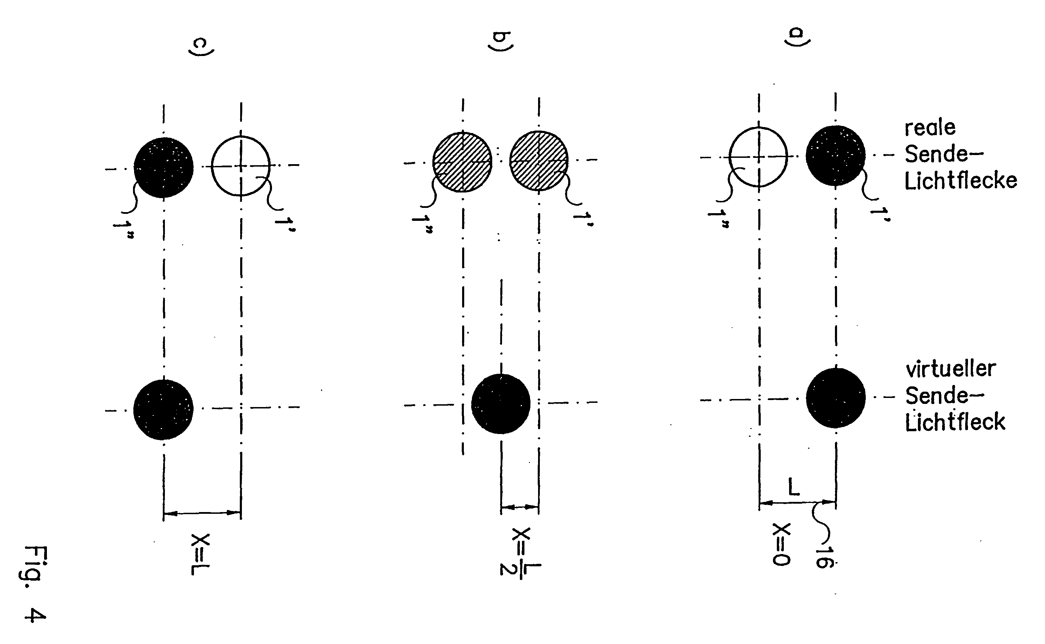

Figur 4 a) mit U_{St}, LED = 0 V,
Figur 4 b) mit U_{St}, LED = 2,5 V,
Figur 4 c) mit U_{St}, LED = 5 V,

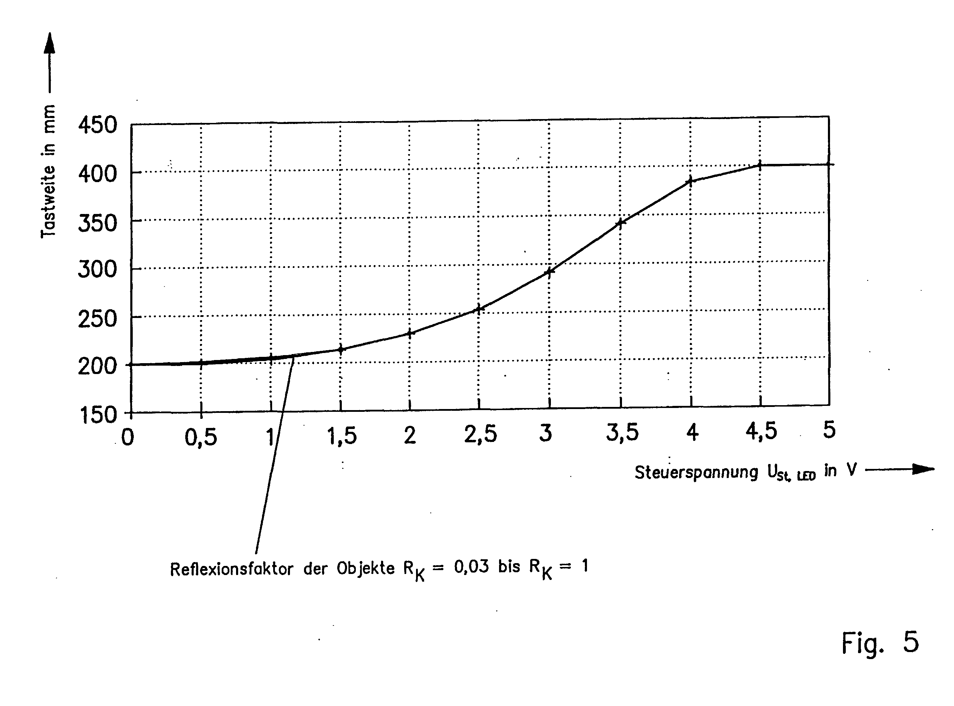

- Figur 5:: Ein beispielhafter funktionaler Zusammenhang zwischen dem Einstellbereich B in mm und der Steuerspannung U_{St, LED} in Volt für den Reflexionsfaktor R_{K} = 0,03 bis R_{K} = 1.

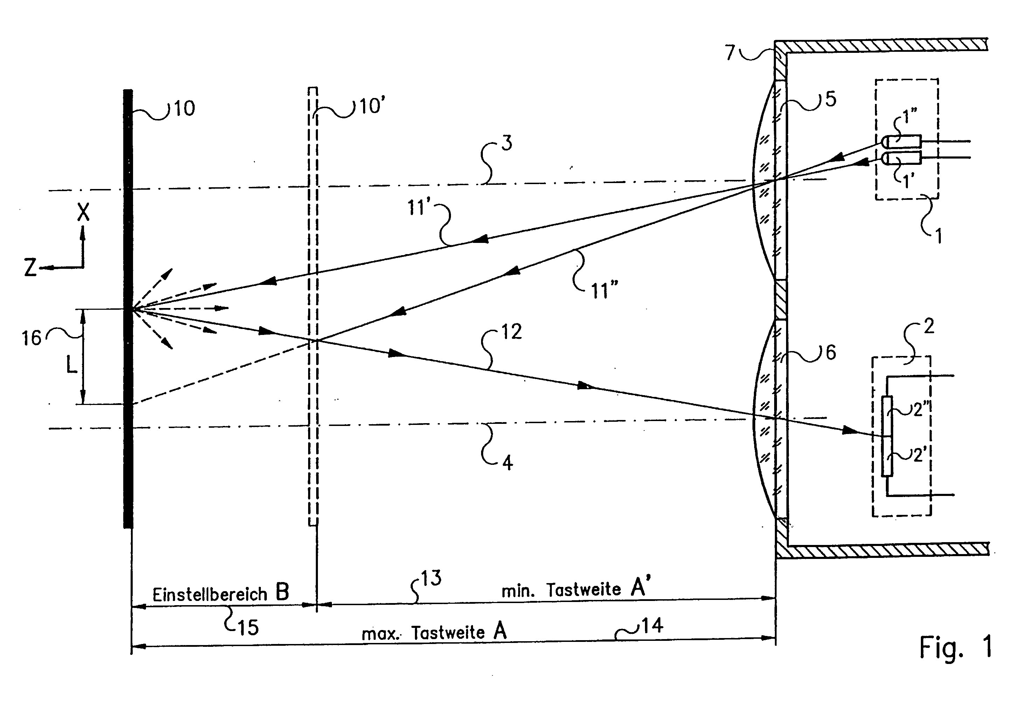

Nach Figur 1 besteht der erfindungsgemäße Reflexionslichttaster aus der Lichtquelle 1 mit den beiden Lichtzentren 1' und 1" sowie aus dem Lichtempfänger 2 mit den beiden lichtempfindlichen Elementen 2' und 2". Die beiden Lichtzentren 1' und 1" werden mittels gemeinsamer Sendeoptik 5 auf der Oberfläche des Tastobjektes 10 bzw. 10' abgebildet, wobei aus Vereinfachungsgründen in Figur 1 nur die beiden Zentralstrahlen 11' und 11" der Sendelichtbündel dargestellt sind. Die beiden Sendelichtbündel mit den Zentralstrahlen 11' und 11" werden vom Tastobjekt 10 bzw. 10' diffus gestreut und mittels Empfangsoptik 6 auf den lichtempfindlichen Elementen 2' und 2" des Lichtempfängers 2 abgebildet. Auch hier ist aus Vereinfachungsgründen nur der empfangsseitige Zentralstrahl 12 eingezeichnet der dann wirksam ist, wenn sich entweder das Tastobjekt 10 bei maximaler Tastweite A befindet und nur das Lichtzentrum 1' angesteuert wird oder das Tastobjekt 10' befindet sich in der Position minimale Tastweite A' und es ist nur das Lichtzentrum 1" aktiv. Der Abstand zwischen den beiden Zentralstrahlen 11' und 11" auf dem Tastobjekt 10 entspricht in X-Richtung bei maximaler Tastweite A dem Längenmaß L.

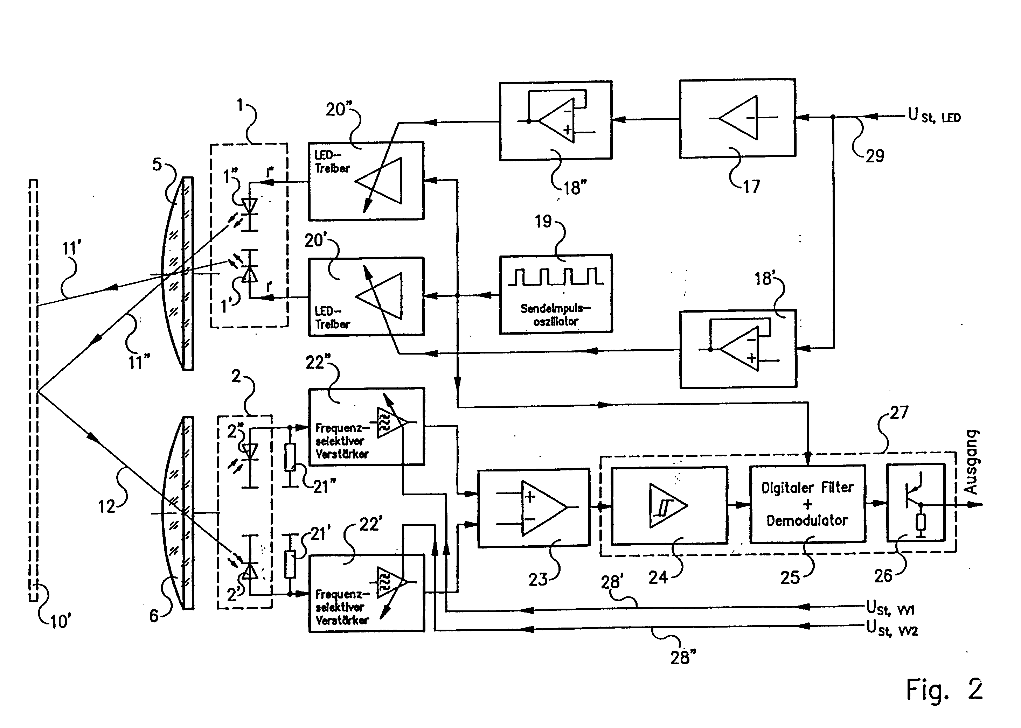

Die Fotoströme der beiden lichtempfindlichen Elemente 2' und 2" des Lichtempfängers 2 werden nach Strom-/Spannungskonversion 21', 21" und getrennter Vorverstärkung 22', 22" der beiden elektrischen Kanäle einem Differenzverstärker 23 zugeführt (siehe auch Figur 2). Das Ausgangssignal des Differenzverstärkers beaufschlagt eine Auswerteschaltung 27, die dieses Signal bezüglich Amplitude und Vorzeichen bewertet.

Wird dieses Signal z.B. positiv und erreicht es eine in der Auswerteschaltung 27 vorgegebene Ansprechschwelle, bedeutet dieses "Tastobjekt befindet sich zwischen fernem Schaltpunkt und Lichttaster", also innerhalb des Tastbereichs. Dagegen folgt für kleinere Signale als die Ansprechschwelle "Tastobjekt befindet sich bei größeren Distanzen als der ferne Schaltpunkt", also außerhalb des Tastbereichs.

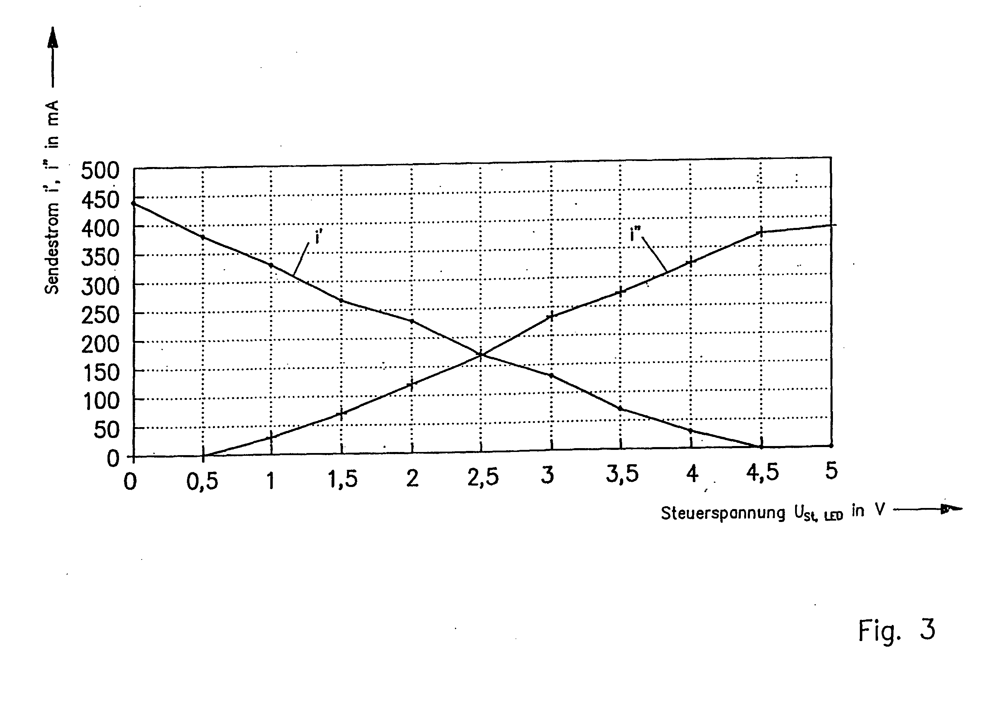

Nach Figur 2 hat die Elektronik des erfindungsgemäßen Reflexionslichttasters folgenden Grundaufbau. Über die an der Steuerleitung 29 anliegenden Steuerspannung U_{St, LED} kann die Intensität der Lichtzentren 1', 1" invers gesteuert werden und zwar kann über die beiden Spannungsfolger 18', 18" die Stromamplitude i', i" durch Verstärkungsvariation der LED-Treiber 20', 20" stufenlos eingestellt werden (siehe auch Figur 3).

Der Sendeimpulsoszillator 19 bestimmt dabei die Stromimpulsbreite sowie die Wiederholfrequenz für die Stromsteuerung der Lichtzentren 1', 1" der Lichtquelle 1.
Auf der Empfangsseite sind die lichtempfindlichen Elemente 2', 2" des Lichtempfängers 2 sowie die Strom-/Spannungskonversion 21', 21" skizziert. Die nachgeschalteten Vorverstärker 22', 22" mit frequenzselektivem Verhalten sind mittels der Steuerspannungen U_{St}, _{W1} bzw. U_{St}, _{W2} (Steuerleitungen 28', 28") in ihrer Verstärkung einstellbar. Mittels U_{St, W1} bzw. U_{St, W2} ist eine unterschiedliche Bewertung der lichtempfindlichen Elemente 2', 2" möglich.

Die Ausgangssignale der Vorverstärker 22', 22" beaufschlagen die Eingänge des Differenzverstärkers 23, der wiederum mit seinem Ausgangssignal auf den Eingang des Schwellwertverstärkers 24 einwirkt.

Nach Schwellwertverstärkung sowie anschließender digitaler Filterung und Demodulation mit Bezugszeichen 25 wird das Binärsignal dem Ausgangstreiber 26 zugeführt, der je nach Objektlage des Tastobjektes 10 bzw. 10' den Ausgang aktiviert oder nicht aktiviert.

In Figur 3 ist wiederum der Zusammenhang zwischen den Sendeströmen i', i" der Lichtzentren 1', 1" als Funktion der Steuerspannung U_{St}, _{LED} aufgetragen. Durch Variation der Steuerspannung U_{St}, _{LED} ist eine kontinuierliche Intensitätssteuerung der beiden Lichtzentren 1', 1" möglich.

Der Effekt der Intensitätssteuerung der Lichtzentren 1', 1" wird in Figur 4 durch die Darstellung der realen Sendelichtflecke auf dem Tastobjekt 10 besonders deutlich. Aus den jeweiligen realen Lichtflecken für die Situationen a) bis c) können die virtuellen Lichtflecke gedanklich erzeugt werden. Für die drei Situationen gilt:
a) U_{St}, _{LED} = 0 V und damit volle Helligkeit im Lichtzentrum 1' und absolute Dunkelheit im Lichtzentrum 1",
b) U_{Sr, LED} = 2,5 V und damit gleiche Helligkeit in beiden Lichtzentren 1', 1",
c) U_{St, LED} = 5 V und damit volle Helligkeit im Lichtzentrum 1" und absolute Dunkelheit im Lichtzentrum 1'.

Entsprechend dieser drei Situationen erfolgt eine Wanderung des virtuellen Lichtflecks von oben nach unten (siehe Figur 4).

Figur 5 zeigt das Ergebnis des elektronisch variierbaren Einstellbereiches B (Tastweite) als Funktion der Steuerspannung U_{St, LED}, und zwar für den Reflexionsfaktor R_{K} = 0,03 bis R_{K} = 1.

## Patentansprüche

1. Reflexionslichttaster, bei dem Lichtsender und Lichtempfänger mit jeweils vorgeordneter Sende- und Empfangsfrontlinse benachbart zueinander angeordnet sind und der mit einer Einrichtung zum Einstellen des Grenzabstands eines Tastobjekts vom Tastergehäuse versehen ist, die lichtempfangsseitig zwei lichtempfindliche Elemente aufweist, deren Ausgangssignale einen Differenzverstärker beaufschlagen, dessen Ausgangssignal in einer Auswerteschaltung bezüglich Amplitude und Vorzeichen bewertet wird, wobei sich das Tastobjekt im Grenzabstand befindet, wenn die Amplitude des Ausgangssignals des Differenzverstärkers einer in der Auswerteschaltung vorgegebenen Ansprechschwelle entspricht, dadurch gekennzeichnet, dass der Lichtsender (1) wenigstens zwei voneinander unabhängige Lichtquellen (1', 1") enthält, der Lichtempfänger wenigstens zwei getrennt auswertbare lichtempfindliche Elemente (2', 2") aufweist und der jeweilige Grenzabstand innerhalb einer definierten Tastzone durch unterschiedliche Verstärkung der Ausgangssignale der lichtempfindlichen Elemente (2', 2") stufenlos einstellbar ist.

2. Reflexionslichttaster nach Anspruch 1, gekennzeichnet durch eine kombinierte Einstellung des Grenzabstands mittels inverser Steuerung der Ströme der Lichtquellen (1', 1") und unterschiedlicher Verstärkung der Ausgangssignale der lichtempfindlichen Elemente (2', 2").

3. Reflexionslichttaster nach den Ansprüchen 1 oder 2, dadurch gekennzeichnet, dass Lichtsender (1) und Lichtempfänger (2) jeweils eine frei wählbare Anzahl voneinander unabhängiger Lichtquellen (1' - 1^{N}) und voneinander getrennter lichtempfindlicher Elemente (2' bis 2^{M}) enthalten.

4. Reflexionslichttaster nach den Ansprüchen 2 oder 3, dadurch gekennzeichnet, dass die verschiedenen Lichtquellen (1' bis 1^{N}) strommäßig kontinuierlich steuerbar sind.

5. Reflexionslichttaster nach den Ansprüchen 1 - 4, dadurch gekennzeichnet, dass die unterschiedliche Verstärkung der Ausgangssignale der lichtempfindlichen Elemente (2' bis 2^{M}) kontinuierlich variierbar ist.

6. Reflexionslichttaster nach Anspruch 4, dadurch gekennzeichnet, dass die Steuerung der Ströme der Lichtquellen (1' bis 1^{N}) mittels einer an der Steuerleitung (29) liegenden Steuerspannung mit sägezahnförmigem Verlauf erfolgt.

7. Reflexionslichttaster nach Anspruch 5, dadurch gekennzeichnet, dass die Fotoströme der lichtempfindlichen Elemente (2' bis 2^{M}) des Lichtempfängers (2) nach Strom / Spannungskonversion (21', 21") und getrennter Vorverstärkung (22', 22") einem Differenzverstärker (23) zugeführt werden, dessen Ausgangssignal eine Auswerteschaltung (27) beaufschlagt, die dieses Signal nach Amplitude und Vorzeichen bewertet.

8. Reflexionslichttaster nach Anspruch 7, dadurch gekennzeichnet, dass die Vorverstärker (22', 22") frequenzselektives Verhalten aufweisen und mittels Steuerspannungen U_{St, W1} und U_{St, W2} über Steuerleitungen (28', 28") in ihrer Verstärkung einstellbar sind.

9. Reflexionslichttaster nach Anspruch 4, dadurch gekennzeichnet, dass die Stromamplitude des Lichtsenders (1) über Spannungsfolger (18', 18") durch Verstärkungsvariation von Treiberstufen (20', 20") stufenlos einstellbar ist.

10. Reflexionslichttaster nach den Ansprüchen 1 bis 9, dadurch gekennzeichnet, dass die Tastzone durch wenigstens zwei unabhängig einstellbare unterschiedliche Schaltpunkte definiert ist.

11. Reflexionslichttaster nach den Ansprüchen 1 - 10, dadurch gekennzeichnet, dass die im Tastergehäuse installierten optischen, optoelektronischen und elektronischen Bauteile unverrückbar im Tastergehäuse (7) befestigt sind.

## Claims

1. Reflected light sensor, in which a light transmitter (1) and a light receiver (2), each with a respective transmitting (5) or receiving (6) front lens arranged in front thereof, are each arranged adjacent the other and which at the light reception end displays at least two separately evaluatable light-sensitive elements (2', 2"), the output signals of which act on a differential amplifier, the output of which is valued in respect of amplitude and sign in an evaluating circuit, characterised thereby, that the light transmitter (1) contains at least two light sources (1', 1"), which are one independent of the other, and the respective limit spacing of a sensed object (10) from the sensor housing (7) is steplessly settable within a defined sensing zone by different amplification of the output signals of the light-sensitive elements (2', 2").

2. Reflected light sensor according to claim 1, characterised by the combined setting of the limit spacing by inverse control of the currents of the light sources (1', 1") and by different amplification of the output signals of the light-sensitive elements (2', 2").

3. Reflected light sensor according to the claims 1 and 2, characterised thereby, that the light transmitter (1) and the light receiver (2) contain a freely selectable number respectively of light sources (1' to 1^{N}) and of light-sensitive elements (2' to 2^{M}), which are one independent of the other.

4. Reflected light sensor according to the claims 2 and 3, characterised thereby, that the different light sources (1' to 1^{N}) are continuously controllable in terms of current.

5. Reflected light sensor according to the claims 1 to (- geändert in to. Em) 4, characterised thereby, that the different amplification of the output signals of the light-sensitive elements (2' to 2^{M}) is continuously variable.

6. Reflected light sensor according to claim 4, characterised thereby, that the control of the currents of the light sources (1' to 1^{N}) takes place by means of a control voltage of sawtooth-shaped course present at the control line (29).

7. Reflected light sensor according to claim 5, characterised thereby, that the photocurrents of the light-sensitive elements (2' to 2^{M}) of the light receiver (2) are fed after current/voltage conversion (21', 21") and separate pre-amplification (22', 22") to a differential amplifier (23), the output signal of which acts on an evaluating circuit (27), which values this signal according to amplitude and sign.

8. Reflected light sensor according to claim 7, characterised thereby, that the preamplifiers (22', 22'') display a behaviour which is frequency-selective by means of control voltages U_{St,VV1} and U_{St,VV2} and are settable in their amplification by way of control lines (28', 28").

9. Reflected light sensor according to claim 4, characterised thereby, that the current amplitude of the light transmitter (1) is steplessly settable by variation of the amplification of driver stages (20', 20") by way of voltage followers (18', 18").

10. Reflected light sensor according to the claims 1 to 9, characterised thereby, that the sensing zone is defined by at least two independently settable different switching points.

11. Reflected light sensor according to the claims 1 to 10, characterised thereby, that the optical, opti-electronic and electronic components installed in the sensor housing are immovably fastened in the sensor housing (7).

## Revendications

1. Détecteur photoélectrique par réflexion dans lequel l'émetteur de lumière (1) et le récepteur de lumière (2) sont disposés au voisinage l'un de l'autre, une lentille frontale d'émission (5) et de réception (6) étant respectivement disposée devant eux, et qui présente du côté de la réception de la lumière au moins deux éléments photosensibles (2', 2"), ceux-ci pouvant être traités séparément et leurs signaux de sortie alimentant un amplificateur différentiel dont le signal de sortie est évalué dans un circuit d'exploitation quant à son amplitude et à son signe, caractérisé par le fait que l'émetteur de lumière (1) contient au moins deux sources lumineuses (1', 1") indépendantes l'une de l'autre, et que la distance limite qui existe à chaque fois entre être réglée continûment à l'intérieur d'une zone de détection bien définie, et ce, grâce à une amplification différente des signaux de sortie des éléments photosensibles (2', 2").

2. Détecteur photoélectrique par réflexion selon la revendication 1, caractérisé par le réglage combiné de la distance limite au moyen d'une commande en sens inverse des courants des sources lumineuses (1', 1") et au moyen d'une amplification différente des signaux de sortie des éléments photosensibles (2', 2").

3. Détecteur photoélectrique par réflexion selon les revendications 1 et 2, caractérisé par le fait que l'émetteur de lumière (1) et le récepteur de lumière (2) contiennent chacun un nombre que l'on peut choisir librement de sources lumineuses (1' à 1^{N}) indépendantes les unes des autres et d'éléments photosensibles (2' à 2^{M}) séparés les uns des autres.

4. Détecteur photoélectrique par réflexion selon les revendications 2 et 3, caractérisé par le fait que les diverses sources lumineuses (1' à 1^{N}) peuvent être commandées continûment en ce qui concerne le courant.

5. Détecteur photoélectrique par réflexion selon les revendications 1 à 4, caractérisé par le fait que l'amplification différente des signaux de sortie des éléments photosensibles (2' à 2^{M}) peut être modifiée continûment.

6. Détecteur photoélectrique par réflexion selon la revendication 4, caracterisé par le fait que la commande des courants des sources lumineuses (1' à 1^{N}) a lieu au moyen d'une tension de commande qui est présente sur le conducteur de commande (29) et dont la courbe est en forme de dents de scie.

7. Détecteur photoélectrique par réflexion selon la revendication 5, caractérisé par le fait que les courants photoélectriques des éléments photosensibles (2' à 2^{M}) du récepteur de lumière (2), après une conversion des courants en tensions (21', 21") et une amplification préalable séparée (22', 22"), sont amenés à un amplificateur différentiel (23) dont le signal de sortie alimente un circuit d'exploitation (27) qui évalue ce signal quant à son amplitude et à son signe.

8. Détecteur photoélectrique par réflexion selon la revendication 7, caractérisé par le fait que les préamplificateurs (22', 22") présentent un comportement sélectif en fréquence, et qu'ils peuvent être réglés quant à leur amplification au moyen de tensions de commande U_{St,VV1} et U_{St,VV2} et par l'intermédiaire de conducteurs de commande (28', 28").

9. Détecteur photoélectrique par réflexion selon la revendication 4, caractérisé par le fait que l'intensité du courant de l'émetteur de lumière (1) peut être réglée continûment par l'intermédiaire de dispositifs d'asservissement de la tension (18', 18") (18, 18' geändert in 18', 18". Em) au moyen d'une variation de l'amplification d'étages d'attaque (20', 20").

10. Détecteur photoélectrique par réflexion selon les revendications 1 à 9, caractérisé par le fait que la zone de détection est définie par au moins deux points de commutation différents qui peuvent être réglés indépendamment.

11. Détecteur photoélectrique par réflexion selon les revendications 1 à 10, caractérisé par le fait que les éléments constitutifs optiques, optoélectroniques et électroniques qui sont installés dans le boîtier du détecteur sont fixés d'une manière immuable le boîtier (7) du détecteur.
